# EUROPÄISCHE PATENTSCHRIFT

(11) **EP 2 630 900 B1**
(45) Veröffentlichungstag und Bekanntmachung des Hinweises auf die Patenterteilung: **22.11.2017**
(21) Anmeldenummer: 13169073.7
(22) Anmeldetag: 04.05.2012
(51) Int. Cl.: A47J 43/046, A47J 36/10, A47J 43/07

(54) **Elektrisch betriebene Küchenmaschine**
Electrically operated kitchen
Machine de cuisine électrique

(30) Priorität: 11.05.2011 DE 102011050286
(43) Veröffentlichungstag der Anmeldung: 28.08.2013
(62) Teilanmeldung aus: 12166823.0
(73) Patentinhaber: Vorwerk & Co. Interholding GmbH, 42275 Wuppertal (DE)
(72) Erfinder: Starflinger, Frank, 44793 Bochum (DE); Arnold, Hans-Peter, 58566 Kierspe (DE)
(74) Vertreter: Müller, Enno

(56) Entgegenhaltungen:
- EP-A1- 1 153 563
- US-B1- 6 340 124

## Beschreibung

Die Erfindung betrifft eine elektrisch betriebene Küchenmaschine nach den Merkmalen des Oberbegriffes des Anspruches 1.

Küchenmaschinen der in Rede stehenden Art sind bekannt. Diese dienen insbesondere im Haushaltsbereich zur Herstellung oder Vorbereitung von Speisen, wozu das der Küchenmaschine zuordbare Gargefäß ausgelegt ist zur Aufnahme von Nahrungsmitteln, bspw. Gargüter oder Fluiden. Insbesondere bei beheizbaren Gargefäßen für Küchenmaschinen werden insbesondere im Zuge des Garprozesses teilweise hohe Drücke innerhalb des Gefäßes erreicht. Ist dem Gargefäß weiter insbesondere im Bodenbereich ein Rührwerk zugeordnet, so wirkt im Rührbetrieb ggf. eine Flüssigkeitssäule unterseitig gegen den auf das Gargefäß aufgesetzten Deckel. Letzterer muss entsprechend an dem Gefäß verriegelt werden, welche Verriegelung die in dem Gargefäß ggf. entstehenden Drücke bzw. die auf den Deckel einwirkenden Kräfte aufnehmen kann. In diesem Zusammenhang sind Lösungen bekannt, bei welchen der Deckel beispielsweise über eine bajonettartige Drehverriegelung an dem Gargefäß festsetzbar ist.

Weiter sind Küchenmaschinen der in Rede stehenden Art bekannt etwa aus der DE 102 10 442 A1.

Aus der EP 1153563 A1 ist eine Küchenmaschine bekannt, bei welcher das Verriegelungsteil insgesamt drehbar in einem umgebenden Gehäuseabschnitt aufgenommen ist. Aus der US 6,340,124 B1 ist eine vergleichbare Ausbildung einer Küchenmaschine bekannt. Gemäß einer Ausführungsform ist ein stangenartig ausgebildetes Verriegelungsteil quer zu seiner Erstreckung mit einem Zahnstangenteil in Eingriff.

Ausgehend von dem genannten Stand der Technik beschäftigt sich die Erfindung mit der Aufgabe, eine Küchenmaschine anzugeben, die hinsichtlich eines Verriegelungsteils günstig ausgebildet ist.

Diese Aufgabe ist beim Gegenstand des Anspruches 1 gelöst, wobei darauf abgestellt ist, dass die Verriegelung aus einem zum Übergreifen des Deckels bestehenden Verriegelungsteil gebildet ist, das durch Drehen aus einer Freigabestellung in die Verriegelungsstellung und umgekehrt verlagerbar ist, und dass das Verriegelungsteil stangenartig ausgebildet ist und in Axialrichtung in einen feststehenden Halterungsabschnitt und einen drehbaren Verriegelungsabschnitt unterteilt ist unterteilt ist, wobei der zur verriegelnden Einwirkung auf den Deckel und/oder den Gefäßrand ausgeformte Abschnitt des Verriegelungsteil einen Einsteckabschnitt aufweist, welcher dem Gehäuse zugeordnet ist und der zur verriegelnden Einwirkung auf den Deckel ausgeformte Abschnitt über eine zugeordnete Gehäusebegrenzung in Axialrichtung frei auskragt, so dass sich nur eine endseitige Halterung bzw. Lagerung des Verriegelungsteils ergibt.

Das Verriegelungsteil ist stangenartig ausgebildet, entsprechend bevorzugt mit einer axialen Länge, die einem Mehrfachen des mittleren Durchmessers des Verriegelungsteiles entspricht. Weiter bevorzugt entspricht die axiale Länge des Verriegelungsteiles dem Drei- bis Achtfachen, weiter bevorzugt dem Vier- bis Fünffachen des größten Durchmessers bzw. dem größten quer zur Längserstreckung betrachteten Erstreckungsmaß. Bevorzugt ist das Verriegelungsteil weiter zumindest über die axiale Erstreckung abschnittsweise kreisrund gestaltet oder zumindest kreisabschnittsförmig.

Hinsichtlich der Unterteilung in Axialrichtung in einen feststehenden Halterungsabschnitt und einen drehbaren Verriegelungsabschnitt ist der Verriegelungsabschnitt der zur verriegelnden Einwirkung auf den Deckel und/oder den Gefäßrand ausgeformte Abschnitt des Verriegelungsteils.

Das Verriegelungsteil ist dreh- bzw. schwenkbeweglich gelagert, dies insbesondere zur Verdrehung bzw. Verschwenkung desselben aus einer Freigabestellung in die Verriegelungsstellung und umgekehrt, dies weiter bevorzugt von Hand, insbesondere durch den Benutzer, weiter alternativ oder kombinativ hierzu zufolge eines elektromotorischen Antriebs des Verriegelungsteiles.

Das Verriegelungsteil erstreckt sich bevorzugt zumindest partiell in einer den Deckelrand und /oder den Gefäßrand umlaufend aufnehmenden Ebene, welche in bevorzugter Ausgestaltung quergerichtet ist zu einer vertikal ausgerichteten Gefäßachse. Entsprechend ist das Verriegelungsteil bevorzugt unmittelbar dem Überdeckungsbereich von Deckelrand und Gefäßrand zugeordnet. Das in die Verriegelungsstellung verbrachte Verriegelungsteil übergreift den Deckel, insbesondere den Deckelrand, so dass weiter bevorzugt zumindest ein die Verriegelung herbeiführender Abschnitt des Verriegelungsteiles in der Verriegelungsstellung in vertikaler Überdeckung zu dem Deckelrand wie auch zu dem Gefäßrand liegt. Hierdurch ist der Deckel gegen ein Abheben nach vertikal oben gesichert, so dass eine gegebene Druckerhöhung innerhalb des Gefäßes aufgenommen ist und/einer Beaufschlagung des Deckels von unten durch eine aufsteigende Flüssigkeitssäule nicht zu einem Abheben des Deckels führt und dieser so den abdeckenden Sitz an dem Gefäß verliert.

Der Deckel, insbesondere der Deckelrand, alternativ der hiermit zusammenwirkende Gefäßrand bzw. ein mit dem Deckel zusammenwirkender Gefäßabschnitt ist weiter bevorzugt mit einer Dichtung versehen, zur insbesondere flüssigkeitsdichtenden Zusammenwirkung von Deckel und Gefäß im Zusammenwirkungsbereich.

Der zur verriegelnden Einwirkung auf den Deckel und/oder den Gefäßrand ausgeformte Abschnitt des Verriegelungsteiles weist weiter den Einsteckabschnitt auf, welcher dem Gehäuse zugeordnet ist, weiter bevorzugt in dem Gehäuse angeordnet ist. Der zur verriegelnden Einwirkung ausgeformte Abschnitt des Verriegelungsteiles kragt über eine zugeordnete Gehäusebegrenzung frei aus. Der Einsteckabschnitt hingegen ist bevorzugt gänzlich in dem Gehäuse aufgenommen, weiter bevorzugt zumindest in Längsrichtung und/oder im Querschnitt betrachtet zu einem größten Teil.

Dadurch bedingt, dass der Einsteckabschnitt zumindest über einen Teil der axialen Erstreckung, bevorzugt über die gesamte axiale Erstreckung, in Umfangsrichtung nur einen Teil einer bevorzugten Kreisfläche bedeckt, ist zumindest teilweise eine von einer geschlossenen Kreisform abweichende Querschnittsgestaltung des Einsteckabschnittes gegeben, dies bspw. und weiter bevorzugt zum Angriff eines küchenmaschinenseitigen Antriebsmittels, welches über den Einsteckabschnitt eine Drehbewegung des Verriegelungsteiles um die Längsachse bewirken kann. Bevorzugt ist hierbei weiter ein Teil der Mantelaußenfläche des Einsteckabschnittes kreisabschnittförmig gestaltet, weiter bevorzugt mit einem über den Umfang gleichen Radius, der weiter gleich oder größer, bevorzugt kleiner ist als ein Radius des weiter bevorzugt zumindest über einen Teil der axialen Länge in Umfangsrichtung zumindest an einer Kreisfläche angepassten Abschnitts des Verriegelungsteiles zur verriegelnden Zusammenwirkung mit dem Deckel und/oder Topf. Durch die gewählte Anordnung und Ausgestaltung des Verriegelungsteiles ist dieses mit geringen Kräften zu betätigen. Bei einer bevorzugten kreisscheibenförmigen Ausgestaltung des Deckels und angepasst kreisförmiger Ausgestaltung der abzudeckenden Gefäßöffnung ist ein lageunabhängiges Aufsetzen des Deckels ermöglicht.

Das an dem Gehäuse der Küchenmaschine frei auskragend angeordnete Verriegelungsteil ist nur endseitig gehaltert bzw. gelagert. Entsprechend können sich zufolge der hierbei exponierten Lage insbesondere des Verriegelungsabschnittes im Lastfall, bspw. dann, wenn das Gargefäß ggf. mit Gargut befüllt an dem bzw. den mehreren Verriegelungsabschnitten hängt, hohe Lagerkräfte entstehen. Diese werden in bevorzugter Ausgestaltung aufgenommen durch den feststehenden, weiter bevorzugt in dem Gehäuse oder zumindest gehäuseseitig festgelegten Halterungsabschnitt. Halterungsabschnitt und Verriegelungsabschnitt wirken zusammen, wobei der Verriegelungsabschnitt gegenüber dem Halterungsabschnitt drehbar ist, zur Verlagerung desselben aus einer Freigabestellung in die Verriegelungsstellung und umgekehrt. Weiter bevorzugt ist der Verriegelungsabschnitt zumindest in Betriebsstellung unverlierbar an dem oder weiter bevorzugt in dem Halterungsabschnitt gehaltert. Eine Aufhebung der Zusammenwirkungsstellung der beiden Abschnitte ist bevorzugt nicht werkzeuglos durchführbar. Halterungsabschnitt und Verriegelungsabschnitt sind bevorzugt aus dem gleichen Material hergestellt, alternativ aus unterschiedlichen Materialien, wobei diesbezüglich weiter bevorzugt ein Hartkunststoff oder ein Metallwerkstoff zum Einsatz kommt. Der Halterungsabschnitt ist querschnittsmäßig bevorzugt angepasst an den weiter bevorzugt aufzunehmenden Abschnitt des Verriegelungsabschnittes, wobei weiter bevorzugt bzgl. des Zusammenwirkungsbereiches eine Wellen-/Wellenaufnahme-Anordnung gewählt ist.

In einer weiter bevorzugten Ausgestaltung ist vorgesehen, dass der Einsteckabschnitt sich in Umfangsrichtung über ein Viertel oder mehr des Umfangs, weiter über Dreiviertel oder weniger erstreckt. Der Einsteckabschnitt ist bevorzugt ausgeführt als Segment eines Kreisprofils mit einer zumindest umfangsmäßigen Erstreckung über 180° bis 275°, weiter bevorzugt 200°. Diese umfangsmäßige Teilerstreckung bzw. Ausbildung eines Teilabschnittes einer Kreisfläche bezieht sich bevorzugt auf die gesamte axiale Erstreckung des Einsteckabschnittes, alternativ lediglich über einen Teilbereich in Axialrichtung, bevorzugt über ein Drittel bis Zweidrittel der axialen Erstreckungslänge des Einsteckabschnittes.

Weiter bevorzugt ist der Einsteckabschnitt massiv ausgebildet, dies weiter bevorzugt über die gesamte axiale Erstreckungslänge desselben. Alternativ kann der Einsteckabschnitt im Querschnitt auch aus mehreren Teilen bestehen, wobei ein Teil gleichsam als Adapterteil dient und das Adapterteil zumindest außenwandungsseitig teilkreisförmig gebildet ist.

Der Einsteckabschnitt weist weiter bevorzugt in Umfangsrichtung freikragende Wandbereiche auf, die zur Betätigung der Verriegelung, d.h. weiter bevorzugt zur Drehverlagerung des Verriegelungsteils, insbesondere des Verriegelungsabschnittes aus der Freigabestellung in die Verriegelungsstellung und umgekehrt genutzt sind. Diese freikragenden Wandbereiche erstrecken sich bevorzugt über den Teilabschnitt einer Kreisfläche des Einsteckabschnittes hinaus, weiter bevorzugt im Querschnitt der Umfangslinie des Kreisflächen-Teilabschnittes weiter folgend. Bevorzugt sind zwei freikragende Wandbereiche vorgesehen, welche mit Bezug auf einen Querschnitt durch den Einsteckabschnitt aufeinander zugerichtet einen Freiraum belassen, zum Eingriff eines Antriebsabschnittes, der mit den Wandbereichen zusammenwirkt. Über die freikragenden Wandbereiche ist ein Schleppen des Einsteckabschnittes und hierüber des gesamten Verriegelungsabschnittes des Verriegelungsteiles bevorzugt um die Körperlängsachse desselben ermöglicht. Die freikragenden Betätigungsabschnitte sind bevorzugt sich in Umfangsrichtung erstreckende Flächenteile, mit einer in Radialrichtung betrachteten Dicke, die einem Fünftel bis zu einem Zwanzigstel, weiter bevorzugt etwa einem Zehntel des Durchmessermaßes des Einsteckabschnittes entspricht. In Längserstreckung des Einsteckabschnittes betrachtet erstrecken sich die freikragenden Betätigungsabschnitte über eine Länge, die bevorzugt einem Zehntel bis einem Halben der Axiallänge des Einsteckabschnittes entspricht, weiter bevorzugt etwa einem Fünftel.

Um insbesondere eine hohe Lagerkräfte aufnehmende Lagerung des Verriegelungsabschnittes anzubieten, weist der Halterungsabschnitt in bevorzugter Ausgestaltung zwei koaxiale Abschnitte auf, zwischen denen in Radialrichtung der Einsteckabschnitt des Verriegelungsabschnittes aufgenommen ist. Es sind so bevorzugt zwei ineinander geschachtelte Drehlagerstellen ausgebildet, welche zwischen dem Verriegelungsabschnitt, insbesondere Einsteckabschnitt, und dem Halterungsabschnitt wirken. Die beiden Abschnitte des Halterungsabschnittes sind konzentrisch angeordnet, weiter bevorzugt konzentrisch zu der Körperlängsachse des Verriegelungsabschnittes. Es ist so weiter bevorzugt eine radial äußere und eine radial innere Drehlagerstelle für den Verriegelungsabschnitt gegeben. Bevorzugt ist eine Lagerung des Einsteckabschnittes im Bereich des radial inneren der beiden koaxialen Abschnitte des Halterungsabschnittes gegeben, während der radial äußere der beiden koaxialen Abschnitte bevorzugt in einem Überlastfall die dann über insbesondere den Einsteckabschnitt auf den Halterungsabschnitt einwirkenden Kräfte ableitet. Es ist hierdurch bevorzugt eine Notabstützung im Bereich des radial äußeren der zwei koaxialen Abschnitte gegeben. Der radial innere der beiden koaxialen Abschnitte bietet die Drehlagerung des Verriegelungsabschnittes im bestimmungsgemäßen Lastfall. Hierdurch ist insgesamt eine lastdifferenzierte Wirkung der beiden, Lagerstellen ausbildenden koaxialen Abschnitte des Halterungsabschnittes erreicht, wobei der radial innere der beiden koaxialen Abschnitte gegenüber dem hiermit zusammenwirkenden Bereich des Einsteckabschnittes ein geringeres Lagerspiel aufweist als im radial äußeren der beiden koaxialen Abschnitte. In weiter bevorzugter Ausgestaltung weist der radial innere der beiden koaxialen Abschnitte einen Durchmesser auf, der einem Drittel bis einem Achtel, weiter bevorzugt einem Fünftel des Durchmessers im radial äußeren der beiden koaxialen Abschnitte entspricht.

Bevorzugt ist der eine Abschnitt des Halterungsabschnittes, weiter bevorzugt der radial innere der beiden koaxialen Abschnitte, ein sich in Axialrichtung erstreckender, zentraler Zapfen, weiter bevorzugt eine als Stift ausgeführte Innenlagerstelle. Der radial äußere der beiden koaxialen Abschnitte ist weiter bevorzugt die Innenfläche einer Umfangswandung des Halterungsabschnittes. Entsprechend besteht der Halterungsabschnitt im Wesentlichen bevorzugt aus einer als Bohrung ausgeführten Außenlagerstelle, in dem eine als Stift bzw. Zapfen ausgeführte Innenlagerstelle konzentrisch angeordnet ist.

Der Verriegelungsabschnitt ist weiter insbesondere über den drehfest mit diesem verbundenen, weiter bevorzugt einstückig mit diesem ausgeformten Einsteckabschnitt winkelbegrenzt in dem Halterungsabschnitt um eine zentrale Achse verdrehbar. Diese zentrale, geometrische Achse ist bevorzugt konstruktiv ausgebildet durch den zentralen Zapfen. Die Verdrehbarkeit des Verriegelungsabschnittes ist winkelbegrenzt, so dass bevorzugt eine Verdrehung aus einer Freigabestellung in eine Verriegelungsstellung und zurück über einen Winkel von 60° bis 120°, weiter bevorzugt 90°, durchgeführt werden kann.

Bevorzugt ist der zentrale Zapfen bzw. Stift über einen Teil seiner Länge über eine Radialwandung an die Innenfläche eines Teils der Umfangswandung angebunden. Entsprechend sind die beiden durch den Zapfen und die Innenfläche der Umfangswandung gebildeten Lagerstellen bevorzugt einseitig zumindest über einen Teilabschnitt des Zapfens, weiter bevorzugt auf der ganzen Länge, über eine stegartige Radialwandung verbunden. Dies bietet eine weitere Stabilität der Lagerausbildung des Halterungsteiles im Überlastfall.

Der Einsteckabschnitt weist bevorzugt eine zentrale, teilgeöffnete Aufnahme für den Zapfen auf. Bevorzugt stellt sich hierdurch eine im Querschnitt zumindest annähernd omega-förmige Ausgestaltung des Einsteckabschnittes ein, wobei die im Querschnitt betrachtete teilgeöffnete Aufnahme einen an dem Durchmesser des aufzunehmenden Zapfens des Halterungsabschnittes angepassten Durchmesser aufweist. Der Zapfen des Halterungsabschnittes und die teilgeöffnete Aufnahme des Einsteckabschnittes bilden im bestimmungsgemäßen Lastfall die wirksame Lagerstelle, während die teilkreisförmig verlaufende Außenfläche des Einsteckabschnittes zur Zusammenwirkung mit der Innenfläche der Umfangswandung des Halterungsabschnittes durchmessermäßig so gewählt ist, dass eine Anlage der Außenfläche des Einsteckabschnittes an der Innenfläche des Halterungsabschnittes nur im Überlastfall erreicht wird, dies weiter bevorzugt zufolge elastischer, rückstellfähiger Deformation, wodurch eine Notabstützung erreichbar ist.

Weiter ist bevorzugt an dem Einsteckabschnitt in Einsteckrichtung desselben vorgeordnet auf einem kleineren Radius ein Distanzteil angeordnet. Dieses Distanzteil ist bevorzugt ein geschlitzter Fortsatz mit kreisrunder Querschnittsgestaltung, welcher Fortsatz von der zentralen Aufnahme des Einsteckabschnittes zentral durchsetzt ist, so dass in der Zusammenwirkungsstellung der Zapfen des Halterungsabschnittes das Distanzteil bzw. Fortsatz durchgreift. Das Distanzteil ist über den Umfang betrachtet unterbrochen zufolge Ausbildung eines Schlitzes. Dieser öffnet sich bevorzugt zur selben Richtung wie die zentrale, teilgeöffnete Aufnahme des Einsteckabschnittes. Die Anordnung dieses Schlitzes bestimmt die Winkelstellung der Lagerpartner beim Montagevorgang und sichert in jeder anderen Winkelstellung den Verriegelungsabschnitt gegen Entnahme, dies weiter bevorzugt infolge Zusammenwirkung mit einer sich von der Innenfläche der Umfangswandung des Halterungsabschnittes erstreckenden Radialwandung, die im Zuge der Montage den Schlitz des Distanzteiles durchsetzt.

Auch weist der Halterungsabschnitt bevorzugt zugeordnet jedenfalls den Betätigungsabschnitten des Verriegelungsabschnittes bzw. Einsteckabschnittes eine Öffnung auf, so dass die Betätigungsabschnitte des Einsteckabschnitts unter Durchgriff durch den Halterungsabschnitt zur Betätigung frei liegen. Die Öffnung innerhalb der Umfangswandung des Halterungsabschnittes ist weiter bevorzugt insbesondere umfangsmäßig so groß gewählt, dass ein durch die Öffnung auf die Betätigungsabschnitte des Einsteckteiles einwirkendes Antriebselement die erforderliche Drehverlagerung des Verriegelungsabschnittes relativ zu dem Halterungsabschnitt über den vorbeschriebenen Winkelbereich durchführen kann. Die Öffnung ist weiter entsprechend bevorzugt in radialer Überdeckung zu den Betätigungsabschnitten des Einsteckteiles vorgesehen, weiter bevorzugt in axialer Richtung betrachtet zumindest über die freie axiale Längserstreckung der Betätigungsabschnitte.

Die jeweiligen Lagerstellen im Bereich des zentralen Zapfens bzw. im Bereich der Innenfläche der Umfangswandung des Halterungsabschnittes sind bevorzugt so ausgelegt, dass die äußere Lagerpaarung in jedem Fall ein größeres Spiel aufweist als die radial innere, welche weiter bevorzugt ein Spiel von 0,2 bis 0,8 mm, weiter bevorzugt 0,5 mm besitzt. Die Wahl des Werkstoffes für den Halterungsabschnitt ist so vorgesehen, dass bei einer zufolge Überlast erreichten Deformation insbesondere des Einsteckabschnitts eine elastische Rückfederung ermöglicht ist. Die innere Lagerstelle in Form des zentralen Zapfens ist weiter bevorzugt an den jeweiligen Enden so ausgebildet, dass sie umlaufend wirkende Kräfte aufnehmen kann.

Durch die vorgeschlagene Lösung ist eine herstellungsgünstige Lagerpaarung kombinierbar mit einem vergleichsweise leistungsschwachen, bevorzugt elektromotorischen Drehantrieb zur Einwirkung auf die Betätigungsabschnitte. Im bestimmungsgemäßen Lastfall (Garen mit maximaler Befüllung des Gartopfes) ist eine Drehung des Verriegelungsteiles mit geringem Bremsmoment ermöglicht, wobei weiter im Überlastfall (bspw. Stoß, Sturz usw.) die Festigkeit insbesondere des Verriegelungsabschnittes gegeben ist.

Bezüglich aller angegebenen Wertebereiche sind alle Zwischenwerte, insbesondere in 1-mm-, 1-Grad- oder 1-Fach-Schritten sowohl hinsichtlich einer ein- oder mehrfachen Einengung der angegebenen Bereichsgrenzen in bspw. der angegebenen Schrittweite, von oben und/oder von unten, wie auch zur Darstellung singulärer Werte innerhalb der angegebenen Bereiche hiermit in die Offenbarung eingeschlossen.

Weitere Merkmale sind nachstehend anhand der beigefügten Zeichnung, welche lediglich ein Ausführungsbeispiel darstellt, näher erläutert. Es zeigt:
- Fig. 1: eine Küchenmaschine der in Rede stehenden Art in Seitenansicht mit einem deckelverschlossenen Gargefäß;
- Fig. 2: die Ansicht gemäß Pfeil II in Fig. 1;
- Fig. 3: die Draufsicht zu Fig. 2;
- Fig. 4: den schematisch dargestellten Schnitt gemäß der Linie IV - IV in Fig. 3, eine Deckelverriegelungsstellung betreffend;
- Fig. 5: eine der Fig. 4 entsprechende Darstellung, die Deckelentriegelungsstellung betreffend;
- Fig. 6: eine der Fig. 5 entsprechende Darstellung bei abgenommenem Deckel;
- Fig. 7: in explosionsperspektivischer Darstellung das aus einem Verriegelungsabschnitt und einem Halterungsabschnitt bestehende Verriegelungsteil;

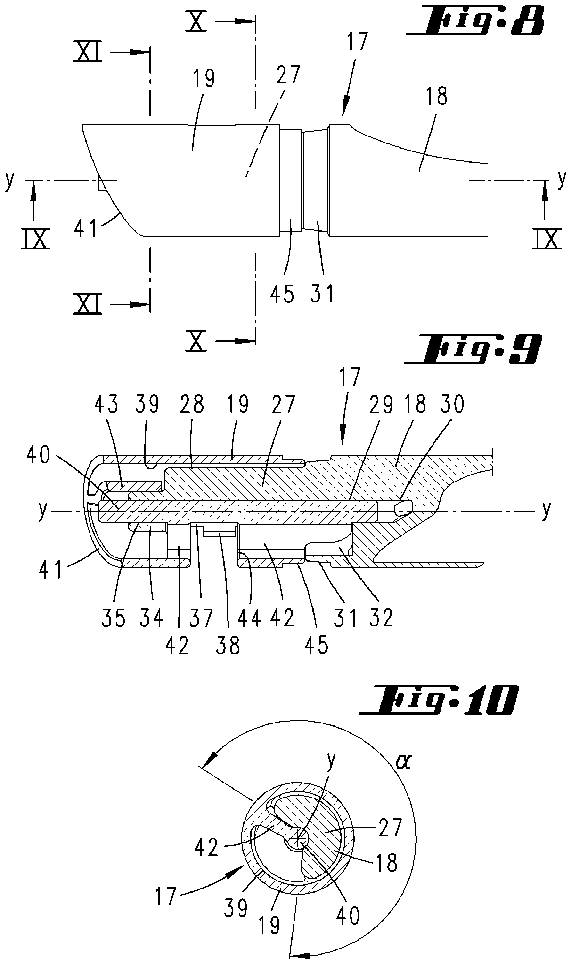

- Fig. 8: das Verriegelungsteil in Seitenansicht, den Halterungsbereich betreffend;
- Fig. 9: den Schnitt gemäß der Linie IX - IX in Fig. 8;
- Fig. 10: den Schnitt gemäß der Linie X - X in Fig. 8;

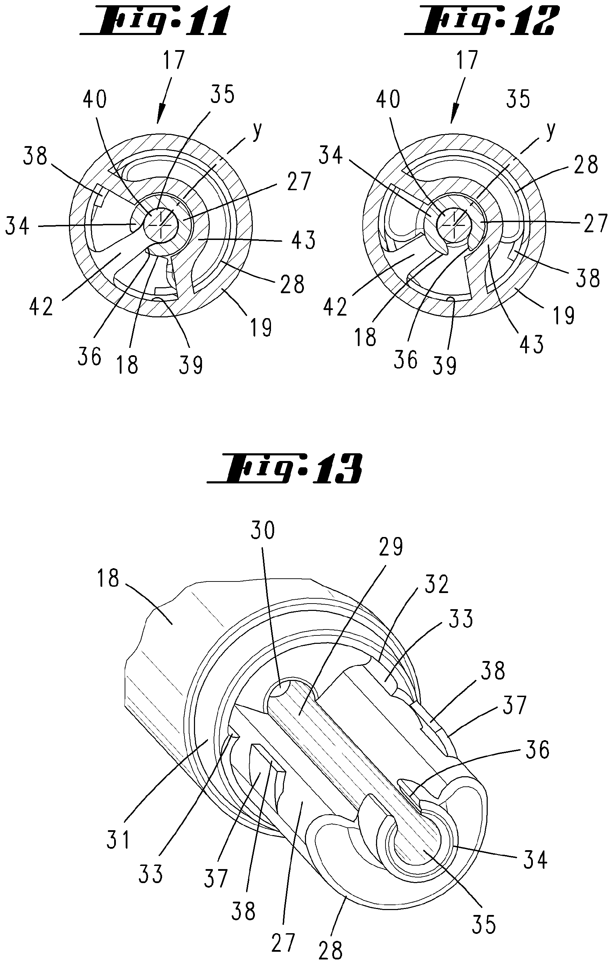

- Fig. 11: den Schnitt gemäß der Linie XI - XI in Fig. 8, eine Drehstellung des Verriegelungsabschnittes zum Halterungsabschnitt in einer Montagestellung betreffend;
- Fig. 12: eine der Fig. 11 entsprechende Darstellung, eine gegenüber dem feststehenden Halterungsabschnitt verdrehte Stellung des Verriegelungsabschnittes betreffend;
- Fig. 13: in perspektivischer Detaildarstellung, den Bereich eines Einsteckabschnittes des Verriegelungsabschnittes;

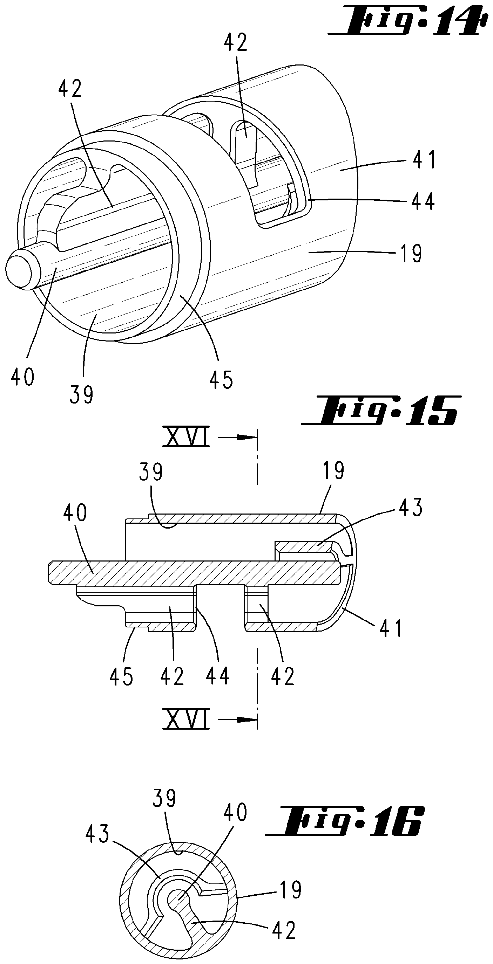

- Fig. 14: in weiter perspektivischer Detaildarstellung den Halterungsabschnitt;
- Fig. 15: den Längsschnitt durch den Halterungsabschnitt;
- Fig. 16: den Schnitt gemäß der Linie XVI - XVI in Fig. 15.

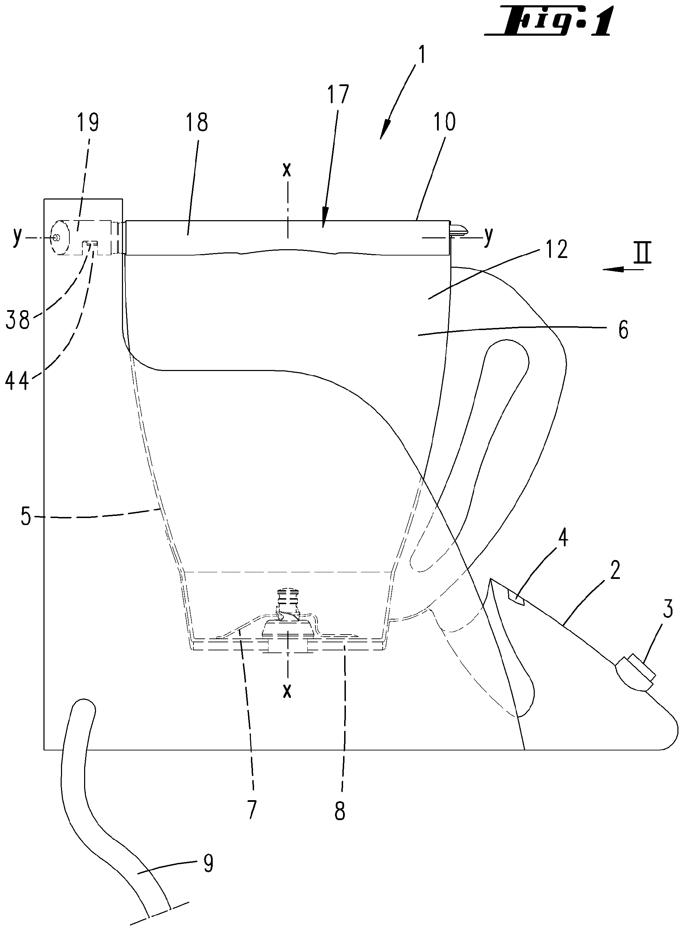

Dargestellt und beschrieben ist zunächst mit Bezug zu Fig. 1 eine elektrisch betriebene Küchenmaschine 1. Diese weist zunächst ein Bedienfeld 2 auf mit bevorzugt einer Mehrzahl von Reglern und/oder Tastern 3 sowie bevorzugt ein Display 4 zum Anzeigen der insbesondere über die Regler und/oder Taster 3 einzustellenden Parameter.

Des Weiteren verfügt die Küchenmaschine 1 über eine Gefäßaufnahme 5.

In diese ist ein Gefäß 6 in Form eines Gargefäßes insbesondere im Fußbereich desselben bevorzugt formschlüssig aufnehmbar und halterbar.

Das Gefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsstellung des Gefäßes 6 in der Gefäßaufnahme 5 formschlüssig gekoppelt mit einem in der Küchenmaschine 1 vorgesehenen Rührwerkantrieb.

Die Elektroversorgung des Rührwerkantriebs sowie einer weiter bevorzugt behälterbodenseitig vorgesehenen Heizung 8 und darüber hinaus auch der elektrischen Steuerung der gesamten Küchenmaschine 1 ist über ein Netzanschlusskabel 9 erreicht.

Das Gefäß 6 ist weiter insbesondere im Betrieb des Rührwerks 7 und/oder der Heizung 8 durch einen Deckel 10 verschlossen. Dieser weist bevorzugt zentral, die Vertikalachse x des Gefäßes 6 aufnehmend, eine Einfüllöffnung 11 auf, dies weiter bevorzugt bei insgesamt im Wesentlichen kreisscheibenförmigem Grundriss des Deckels 10.

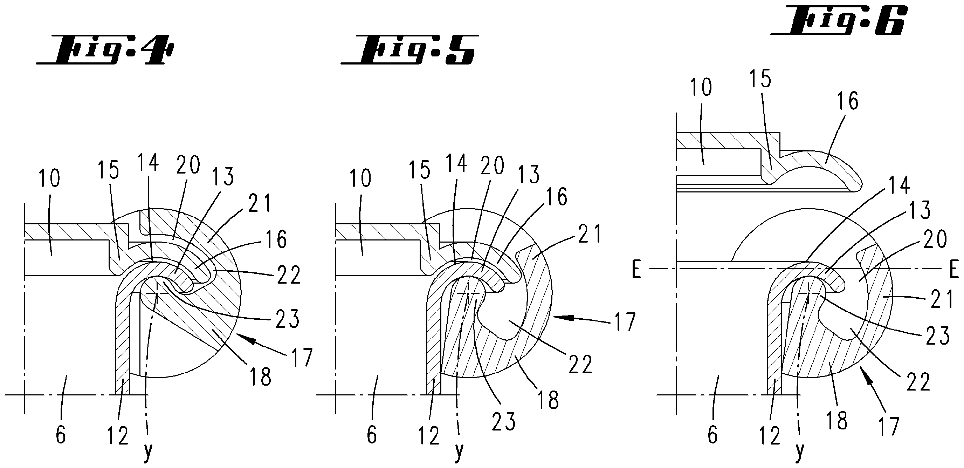

Das Gefäß 6 weist eine vom Bodenbereich sich in Vertikalrichtung nach oben erstreckende Gefäßwandung 12 auf, die gefäßöffnungsseitig in einen nach radial außen abragenden Gefäßrand 13 übergeht. Letzterer ist mit Bezug auf einen Vertikalquerschnitt (vgl. Fig. 4) kreislinienabschnittförmig gebildet, weiter bevorzugt halbkreislinienförmig, mit einer nach vertikal oben gerichteten Wölbungsfläche 14.

Der Deckel 10 ist unterseitig, d.h. in Zuordnungsstellung dem Gefäßinneren zugewandt, mit einem sich im Wesentlichen koaxial zur Vertikalachse x erstreckenden umlaufenden Kragen 15 versehen. Fußseitig des Kragens 15, entsprechend entlang der in Zuordnungsstellung dem Gefäßinneren zugewandten Kragenrandkante, ist ein nach radial außen sich erstreckender Deckelrand 15 angeformt. Dieser erstreckt sich mit Bezug auf einen Vertikalschnitt gemäß Fig. 6 angepasst an den Gefäßrand 13 kreislinienabschnittförmig, weiter bevorzugt in Zuordnungsstellung des Deckels 10 unter konzentrischem Verlauf zu dem Gefäßrand 13. In der Zuordnungsstellung stützt sich der Deckel 10 über dessen Deckelrand 16 auf dem Gefäßrand 13 ab (vgl. Fig. 4).

Wenngleich nicht dargestellt, ist an dem Deckel 10 oder im Bereich des Gefäßrandes 13 eine Dichtung vorgesehen, insbesondere zur fluiddichten Anordnung des Deckels 10 auf dem Gefäß 6. In üblicher Weise besteht eine solche Dichtung aus einem Weichkunststoffmaterial, bspw. aus einem thermoplastischen Elastomer.

Insbesondere im Betrieb der Küchenmaschine, weiter insbesondere im Rührwerk- und/oder Heizbetrieb ist der auf das Gefäß 6 aufgesetzte Deckel 10 zu verriegeln, da im Betrieb der Küchenmaschine 1 ggf. hohe Kräfte bspw. durch einen Zerkleinerungsprozess mittels des Rührwerks 7 und/oder durch eine Fluiddynamik im Gefäß 6 entstehen können. Hierzu weist die Küchenmaschine 1 mindestens ein Verriegelungsteil 17 auf, welches den Deckel 10 gegen das Gefäß 6 verriegelt. Dieses Verriegelungsteil 17 ist bevorzugt langgestreckt, wellenartig ausgebildet, mit einer zentralen, in Längserstreckung ausgerichteten Achse, welche zugleich eine Drehachse y des Verriegelungsteiles 17 darstellt. Letztere erstreckt sich weiter parallel zu einer durch den Deckelrand 16 bzw. durch den Gefäßrand 13 aufgespannten Ebene E.

Weiter ist die Anordnung der Drehachse y bevorzugt so gewählt, dass diese sich radial außerhalb des Gefäßrandes 13, weiter in vertikaler Überdeckung zu dem Gefäßrand 13 unterhalb desselben erstreckt. Hierbei ist weiter bevorzugt, dass die Drehachse y mit Bezug auf einen Vertikalschnitt gemäß Fig. 4 den Mittelpunkt des kreislinienabschnittförmigen Gefäßrandes 13 schneidet.

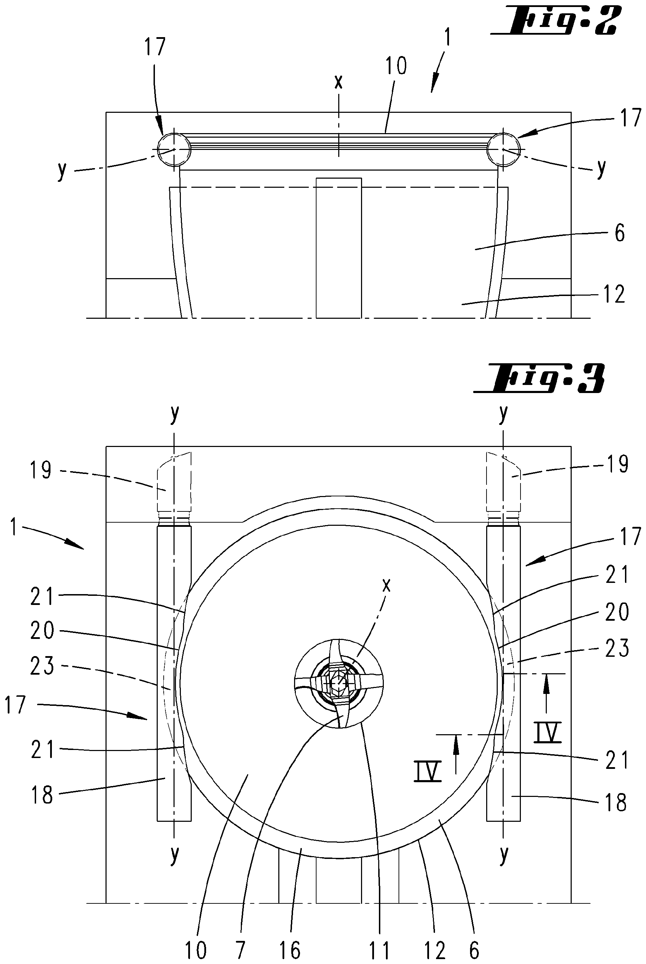

Das insgesamt langgestreckt zylinderförmige Verriegelungsteil 17 ist zufolge der vorbeschriebenen Anordnung und Ausrichtung der Drehachse y derart angeordnet, dass dieses mit Bezug auf eine Draufsicht (vgl. Fig. 3) den Gargefäßrand 13 sowie in Zuordnungsstellung den Deckelrand 16 sekantenartig schneidet, wobei in dem dargestellten Ausführungsbeispiel die axiale Länge des Verriegelungsteiles 17 so gewählt ist, dass beide Endbereiche desselben mit Bezug auf eine Draufsicht frei über den sekantenartig, partiell umfassten Randbereich hinausragen.

Das insgesamt wellenartige Verriegelungsteil 17 ist weiter mit einer sich in dem dargestellten Ausführungsbeispiel etwa über 60% bis 70% der axialen Länge des Verriegelungsteiles 17 erstreckenden Höhlung 20 versehen. Dies ist so gestaltet, dass sich jeweils zugeordnet dem in axialer Richtung betrachteten Endbereich in der Höhlung 20 mit Bezug auf einen Vertikalschnitt, d.h. mit Bezug auf einen senkrecht zur Drehachse y betrachteten Schnitt, ein kreisbogenartiger Übergreifabschnitt 21 einstellt. Dieser erstreckt sich konzentrisch zur Drehachse y, wobei der von dem Übergreifabschnitt 21 überdeckte Höhlungsabschnitt 22 hinsichtlich seiner Radialerstreckung als auch hinsichtlich seiner Erstreckung in Umfangsrichtung ausgelegt ist, zur formschlüssigen Aufnahme des Gefäßrandes 13 sowie des Deckelrandes 16 des auf dem Gefäß 6 aufgesetzten Deckels 10. Der hierbei mit Bezug auf einen Vertikalschnitt sich freikragend erstreckende Übergreifabschnitt 21 erstreckt sich kreisbogenartig, in dem dargestellten Ausführungsbeispiel über einen Bereich von etwa 80° bis 85°.

Die sich zufolge der vorbeschriebenen Ausgestaltung einstellenden Verriegelungsbereiche im Bereich der Übergreifabschnitte 21 sind in Erstreckungsrichtung der Drehachse y betrachtet um ein Maß zueinander beabstandet, welches in dem dargestellten Ausführungsbeispiel etwa einem Drittel des Deckeldurchmessers entspricht.

Weiter in Erstreckungsrichtung der Drehachse y betrachtet ist mittig zwischen den Übergreifabschnitten 21 ein Auflagebereich 23 ausgebildet. Dieser ist bevorzugt kugelkopfartig oder ballenartig ausgeformt, insbesondere mit Bezug auf einen Vertikalschnitt gemäß Fig. 4 mit einer Auflagefläche, welche konzentrisch zur Drehachse y verläuft und somit weiter bevorzugt in entsprechender Zuordnungsstellung konzentrisch zu dem Verlauf des Gargefäßrandes 13 und/oder des Deckelrandes 16 in einem Vertikalschnitt.

In dem Auflagebereich 23 ist die Höhlung 20 so gebildet, dass in einer Deckelfreigabestellung gemäß Fig. 5 sich oberhalb des Auflagebereiches 23 ein freies vertikales Anheben bzw. Absenken des Gefäßes 6 sowie des Deckels 10 erreichen lässt. Zufolge der bevorzugt insgesamt kreisscheibenförmigen Ausgestaltung des Deckels 10 ist dieser ungerichtet dem Gefäßrand zuordbar.

Die Drehachse y des Verriegelungsteils 17 erstreckt sich durch das Zentrum des Auflagebereiches 23, um so bei einer Rotation des Verriegelungsteiles 17 die Gefäßposition konstant zu halten.

In der Zuordnungsstellung (vgl. Fig. 4) lagert auf der ballig bis kugelig ausgeführten Fläche des Auflagebereiches 23 der Gefäßrand 13, wobei das Gefäß 6 vertikal durch das Verriegelungsteil 17 gehalten ist, um etwaige Längentoleranzen zwischen Gefäß 6 und Gefäßaufnahme 5 gezielt auf der Gefäßunterseite ausgleichen zu können.

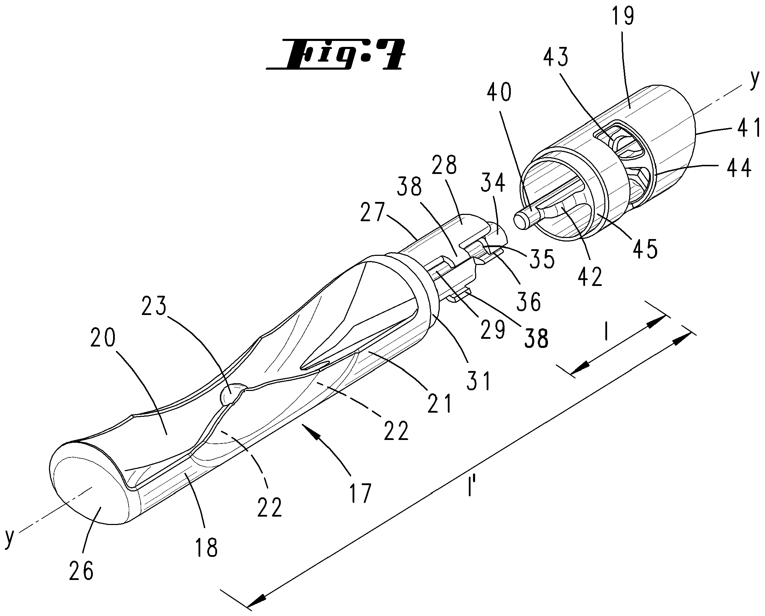

Wie insbesondere aus der Darstellung in Fig. 7 zu erkennen, setzt sich das Verriegelungsteil 17 im Wesentlichen aus einem Verriegelungsabschnitt 18 und einem Halterungsabschnitt 19 zusammen. Der Verriegelungsabschnitt 18 ist hierbei bevorzugt stangenartig, entsprechend langgestreckt und im Wesentlichen als rotationssymmetrisches Teil gebildet, weist weiter die vorbeschriebenen Übergreif- und Hüllungsabschnitte 21, 22 sowie Auflagebereich 23 und Übergriff 24 auf.

Gegenüberliegend zu dem frei auskragenden Ende 26 des Verriegelungsabschnittes 18 ist einstückig und bevorzugt materialeinheitlich ein Einsteckabschnitt 27 angeformt, mit einer in Axialrichtung betrachteten Länge 1, die bevorzugt einem Drittel bis einem Fünftel, weiter bevorzugt einem Viertel der Gesamtlänge l' des Verriegelungsabschnittes 18 entspricht.

Der Einsteckabschnitt 27 ist weiter bevorzugt konzentrisch zur Drehachse y angeordnet und weist im Querschnitt im Wesentlichen eine Omega-Form auf, mit einer Umfangsfläche 28, deren Radius bevorzugt Dreiviertel bis Vierfünftel des größten Radius des Verriegelungsabschnittes 18 entspricht. Durch die im Wesentlichen omega-förmige Querschnittsgestaltung bedeckt der Einsteckabschnitt 27 bevorzugt über dessen gesamte axiale Länge l in Umfangsrichtung nur einen Teilabschnitt einer Kreisfläche. So erstreckt sich der Einsteckabschnitt 27 in Umfangsrichtung bevorzugt über einen Winkel α von 200° bis 210°.

Weiter ist der Einsteckabschnitt 27 zentral, in Betriebsstellung die Drehachse y aufnehmend, mit einer teilgeöffneten Aufnahme 29 in Form eines Schlitzes versehen. Diese Aufnahme 29 öffnet in Richtung der durch den Einsteckabschnitt 27 nicht bedeckten Kreisfläche und erstreckt sich bevorzugt über die gesamte Länge l des Einsteckabschnittes 27. Das dem freien Stirnbereich des Einsteckabschnittes 27 abgewandte Ende der Aufnahme 29 mündet in einer durchmesserangepassten Sacklochbohrung 30 im Bereich des Verriegelungsabschnittes 18.

Weiter diesem, die Sacklochbohrung 30 aufweisenden Ende des Einsteckabschnittes 27 ist der Verriegelungsabschnitt 18 mit einer umlaufenden Radialstufe 31 versehen, deren Radius kleiner ist als der größte Radius des Verriegelungsabschnittes 18, jedoch größer als der Radius des Einsteckabschnittes 27. In Axialrichtung betrachtet erstreckt sich die Radialstufe 31 bevorzugt über ein Fünftel bis ein Siebtel, weiter bevorzugt über ein Sechstel der Länge l des Einsteckabschnittes 27.

Im Bereich der Radialstufe 31 ist weiter bevorzugt zugeordnet der durch den Einsteckabschnitt 27 im Querschnitt nicht bedeckten Kreisfläche eine axiale Einsenkung 32 ausgebildet, welche im Querschnitt betrachtet nach radial außen durch eine Innenfläche der Umfangswandung der Radialstufe 31 begrenzt ist, sowie in Umfangsrichtung jeweils durch eine Anschlagschulter 33. Diese Anschlagschultern 33 sind mit Bezug zu einer den Einsteckabschnitt 27 im Querschnitt teilenden, senkrecht zur Drehachse y verlaufenden Geraden diametral gegenüberliegend angeordnet. Die Sacklochbohrung 30 der Aufnahme 29 ist im Bereich eines Bodens der Einsenkung 32 vorgesehen.

In Einsteckrichtung des Verriegelungsabschnittes 18, d.h. weiter gegenüberliegend dem freien Ende 26 ist an dem Einsteckabschnitt 27 ein Distanzteil 34 angeordnet. Dieses fortsatzartige Distanzteil 34 erstreckt sich von der freien Stirnfläche des Einsteckabschnittes 27 in Verlängerung desselben frei auskragend, hierbei weiter bevorzugt die Drehachse y zentral aufnehmend. Weiter bevorzugt ist das Distanzteil 34 im Wesentlichen hülsenartig gestaltet, weiter bevorzugt einstückig und materialeinheitlich mit dem Einsteckabschnitt 27 ausgeformt.

Das Distanzteil 34 ist gegenüber dem Einsteckabschnitt 27 durchmesserreduziert, weist bevorzugt hierbei einen Außendurchmesser auf, der etwa dem 0,5-Fachen des Durchmessers des Einsteckabschnittes 27 entspricht. Zentral ist das Distanzteil 34 durchsetzt von einer Bohrung 35, mit einem dem Radius der Aufnahme 29 entsprechenden Radius.

Weiter ist das Distanzteil 34 über dessen gesamte Länge, die bevorzugt einem Viertel bis einem Fünftel der Länge l des Einsteckabschnittes 27 entspricht, geschlitzt. Entsprechend ist die Umfangswandung des Distanzteiles 34 unterbrochen. Der Schlitz 36 öffnet sich mit Bezug auf einen Querschnitt in dieselbe Richtung wie die schlitzförmige Aufnahme 29 des Einsteckabschnittes 27.

Der insgesamt massiv ausgebildete Einsteckabschnitt 27 formt über einen Teilbereich seiner Länge Wandbereiche 37 aus. Diese sind etwa mittig in Längserstreckung des Einsteckabschnittes 27 inklusive des Distanzteiles 34 angeordnet, formen weiter im Querschnitt betrachtet über den Querschnitt des Einsteckabschnittes 27 hinaus freikragende Betätigungsabschnitte 38 in Form sich in Umfangsrichtung erstreckender Flächenteile aus. Diese Betätigungsabschnitte 38 verlaufen im Querschnitt gekrümmt, weiter bevorzugt wandungsaußenseitig den Radius des Einsteckabschnittes 27 bzw. dessen Umfangsfläche 28 aufnehmend. Die radiale Stärke eines jeden Betätigungsabschnittes 38 entspricht im Wesentlichen der radialen Wandungsstärke des Distanzteiles 34, weiter bevorzugt etwa 1 mm bis 3 mm, bevorzugt 2 mm. Die beiden Betätigungsabschnitte 38 sind im Querschnitt betrachtet diametral gegenüberliegend angeordnet, dies weiter mit einer Erstreckung in Umfangsrichtung, die einen Öffnungswinkel zwischen den Betätigungsabschnitten 38 belässt, der bevorzugt 80° bis 100°, weiter bevorzugt 90° beträgt.

Der Halterungsabschnitt 19 ist in dem Gehäuse der Küchenmaschine 1 drehfest gehaltert. Hierbei handelt es sich bevorzugt um ein rotationssymmetrisches Teil, welches weiter bevorzugt insgesamt hohlzylinderartig gestaltet ist. Die Innenfläche 39 der Umfangswandung des Halterungsabschnittes 19 formt eine radial äußere Lagerstelle für den Einsteckabschnitt 27 des Verriegelungsabschnittes 18.

Weiter ist in dem Halterungsabschnitt 19 ein sich in Axialrichtung erstreckender, zentraler Zapfen 40 vorgesehen. Dieser erstreckt sich stiftartig bevorzugt über die gesamte axiale Länge des Halterungsabschnittes 19, welche axiale Länge des Halterungsabschnittes 19 im Wesentlichen der Länge l des Einsteckabschnittes 27 entspricht.

Der Zapfen 40 erstreckt sich weiter über eine in Zuordnungsstellung dem Verriegelungsabschnitt 18 zugewandte Stirnseite des Halterungsabschnittes 19 hinaus, dies bevorzugt über eine axiale Länge, welche etwa einem Drittel der axialen Länge l des Einsteckabschnittes 27 entspricht. Der Durchmesser des Zapfens 40 ist angepasst an den Durchmesser der teilgeöffneten Aufnahme 29 des Einsteckabschnittes 27 bzw. angepasst an die Bohrung 35 des Distanzteiles 34. Der Zapfen 40 formt eine radial innere Lagerstelle, die entsprechend konzentrisch angeordnet ist, zu der radial äußeren Lagerstelle im Bereich der Innenfläche 39.

Der Zapfen 40 ist einerends an einer in Zuordnungsstellung dem Verriegelungsabschnitt 18 abgewandten Stirnwandung 41 des Halterungsabschnittes 19 angebunden. Weiter ist eine Verbindung des zentralen Zapfens 40 mit der Innenfläche 39 über eine Radialwandung 42 gegeben, welche Radialwandung 42 sich über einen Teilbereich der axialen Länge des Zapfens 40 erstreckt, weiter bevorzugt über die in Zuordnungsstellung dem Verriegelungsabschnitt 18 zugewandte Stirnfläche hinausragend. In Axialerstreckung über diese Radialwandung 42 hinaus bildet der Zapfen 40 seine komplette Zylinderstiftform aus.

Im Bereich des der Stirnfläche 41 zugeordneten Endes des Zapfens 40 ist dieser im Querschnitt gegenüberliegend zu der Radialwandung 42 von einem im dargestellten Ausführungsbeispiel im Querschnitt etwa omega-förmigen Stützschirm 43 umfasst. Dieser weist zur radialen Distanzierung zum Zapfen 40 einen Innenradius auf, der bevorzugt im Wesentlichen dem Außenradius des Distanzteiles 34 des Einsteckabschnittes 27 entspricht.

Weiter ist der Halterungsabschnitt 19 im Bereich seiner Wandung mit einer fensterartigen Öffnung 44 versehen. Diese ist weiter im Querschnitt betrachtet zugeordnet dem Bereich der Radialwandung 42, welche weiter bevorzugt im Bereich der Öffnung 44 ausgeklinkt ist, so dass in einer vertikalen Projektion betrachtet ein Teilbereich des Zapfens 40 frei liegt.

Der Außendurchmesser des Halterungsabschnittes 19 ist bevorzugt gleich dem größten Außendurchmesser des Verriegelungsabschnittes 18, wobei weiter dem einsteckseitigen Ende des Halterungsabschnittes 19 eine der Radialstufe 31 des Verriegelungsabschnittes 18 entsprechende Radialstufe 45 ausgeformt ist.

Die Radialstufe 45 des Halterungsabschnittes 19 und weiter bevorzugt auch die Radialstufe 31 des Verriegelungsabschnittes 18 durchdringen den Bereich einer nicht näher dargestellten Gehäuseöffnung, welche weiter bevorzugt durchmesserangepasst ist an den Durchmesser der Radialstufen.

Zur bevorzugt werksseitigen Montage des Verriegelungsabschnittes 18 wird dessen Einsteckabschnitt 27 unter Durchsetzung des Zapfens 40 durch das Distanzteil 34 in die teil geöffnete Aufnahme 29 in den Halterungsabschnitt 19 eingeführt. Die Anordnung des Schlitzes 36 im Distanzteil 34 bestimmt hierbei die Winkelstellung der Lagerpartner beim Montagevorgang, wobei im Zugang des Montagevorganges der Schlitz 36 von der Radialwandung 42 des Halterungsabschnittes 19 durchfahren wird. In der axial anschlagbegrenzten Einsteckstellung des Einsteckabschnittes 27 hintergreift das Distanzteil 34 die Radialwandung 42, so dass in jeder anderen Winkelstellung als die Montagestellung der Einsteckabschnitt 27 gegen Entnahme gesichert ist. In der Montagestellung liegen die Betätigungsabschnitte 38 des Einsteckabschnittes 27 in der Öffnung 44 des Halterungsabschnittes 19 zur Betätigung frei. An diese Betätigungsabschnitte 38 greift bevorzugt ein nicht dargestellter, elektromotorisch betätigter Hebel, zur Drehverlagerung des Verriegelungsabschnittes 18 aus einer Deckelfreigabestellung in eine Verriegelungsstellung und umgekehrt, dies zufolge entsprechender Einwirkung auf die einsteckabschnittseitigen Betätigungsabschnitte 38.

Durch die gewählte Anordnung sind zwei ineinander geschachtelte Drehlagerstellen gegeben. Um hierbei eine lastdifferenzierte Wirkung der beiden Lagerstellen zu erreichen, ist die radial innere Lagerstelle zwischen Zapfen 40 und zentraler Aufnahme 29 des Einsteckabschnittes 27 mit einem geringeren Lagerspiel ausgeführt als die radial äußere Lagerstelle zwischen dem Einsteckabschnitt 27, insbesondere dessen Umfangsfläche 28 und der Innenfläche 39 des Halterungsabschnittes 19. Die innere Lagerstelle im Bereich des Zapfens 40 weist hierbei bevorzugt ein radiales Spiel von 0,2 bis 0,8 mm, weiter bevorzugt 0,5 mm auf, während im Bereich der radial äußeren Lagerpaarung ein radiales Spiel von bevorzugt 0,5 bis 1,5 mm, weiter bevorzugt 1 mm, vorliegt.

Die Festigkeit des Zapfens 40 ist weiter so ausgelegt, dass im bestimmungsgemäßen Lastfall die Drehlagerung vollständig im Bereich der radial inneren Lagerstelle stattfindet. Hierdurch ist eine Leichtlaufsituation gegeben und somit eine Drehung des Verriegelungsabschnittes 18 mit geringem Bremsmoment ermöglicht. Im Überlastfall deformiert sich die Außengeometrie des Halterungsabschnittes 19 bis eine Anlage des Einsteckabschnittes 27 an der Innenfläche 39 erfolgt. Hierdurch ist eine Notabstützung gegeben. Durch die elastische Ausgestaltung des Halterungsabschnittes 19, insbesondere dessen Außenwandung, ist bei der Deformation zufolge Überlast eine elastische Rückfederung ermöglicht. Die innere Lagerstelle im Bereich des Zapfens 40 ist in den jeweiligen Endbereichen so ausgebildet, dass sie umlaufend wirkende Kräfte aufnehmen kann. So greift der frei über die Stirnfläche des Halterungsabschnittes 19 auskragende Zapfen 40 einsteckabschnittseitig in die Sacklochbohrung 30 ein, während in dem gegenüberliegenden Endbereich eine radiale Abstützung des einsteckabschnittseitigen Distanzteiles 34 durch den halterungsabschnittseitigen Stützschirm 43 gegeben ist.

Eine Drehwinkelbegrenzung des Verriegelungsabschnittes 18 ist bevorzugt erreicht durch Anschlagen der Anschlagschultern 33 im Bereich der einsteckabschnittseitigen Einsenkung 32 an den zugewandten Flächen der teilweise über die freie Stirnfläche des Halterungsabschnittes 19 hinausragenden Radialwandung 42.

Zum Betrieb der Küchenmaschine 1 wird der Deckel 10 aufgelegt, dies unter unmittelbarer Abstützung des Deckelrandes 16 auf dem Gefäßrand 13, ggf. mittelbar unter Zwischenschaltung einer Dichtung.

Zufolge Drehverlagerung des Verriegelungsabschnittes 18 werden die in Axialrichtung zueinander distanzierten Übergreifabschnitte 21 über den Deckelrand 16 verlagert bis hin in eine Endstellung gemäß Fig. 4, in welcher der verriegelte Zustand des Deckels 10 erreicht ist. Bevorzugt wird hierbei keine axiale Verspannung vom Gefäß 6 und Deckel 10 erreicht. Vielmehr wird bevorzugt allein sichergestellt, dass das Gefäß 6 und der Deckel 10 im verriegelten Zustand auch durch hohe Kräfte nicht zu trennen sind. Die Dichtigkeit wird durch die erwähnte Radialdichtung sichergestellt.

Wie weiter bevorzugt sind zwei Verriegelungsteile 17 vorgesehen, die mit Bezug auf eine Draufsicht gemäß Fig. 3 gegenüberliegend angeordnet sind, dies bei bevorzugter paralleler Ausrichtung der Drehachsen y zueinander. Zufolge dieser Anordnung ist bedingt durch die jeweils zwei ausgebildeten Übergreifabschnitte 21 je Verriegelungsteil 17 eine insgesamt Vier-Punkt-Verriegelung des Deckels 10 erreicht. Hieraus ergibt sich, dass sich das Gargefäß 6 über den Gargefäßrand 13 zunächst auf zwei um 180° gegenüberliegenden Auflagenbereichen 23 abstützt, so dass mit Bezug auf eine Draufsicht die die Verriegelungsbereiche miteinander verbindenden Linien sich im Bereich der Vertikalachse x des Gefäßes 6 schneiden, wobei weiter der Schnittpunkt der Verbindungslinien senkrecht oberhalb des Gefäßschwerpunktes liegt. Hierdurch wird erreicht, dass das Gefäß 6 kein abstützendes Kippmoment aufbaut, welches an anderer Stelle abgestützt werden müsste.

Insbesondere zufolge der in Erstreckungsrichtung der Drehachse y zueinander beabstandet ausgebildeten Übergreifabschnitte 21 bzw. Verriegelungsbereiche ist erreicht, dass der Kraftfluss von den Auflagebereichen 23 der Verriegelungsteile 17 unter den Gefäßrand 13 durch das jeweilige Verriegelungsteil 17 zu den Übergreifabschnitten 21 und darüber auf den Deckel 10 aufgebracht werden. Hierdurch werden in dem dargestellten Ausführungsbeispiel vier Andruckstellen auf dem Umfang des Deckels 10 gebildet. Gefäß 6 sowie die Verriegelungsteile 17 weisen die notwendige Steifigkeit für die Verteilung der Kraft auf, was in vorteilhafter Weise zu einer Erweiterung der Werkstoffwahl für den Deckel 10 führt.

### Bezugszeichenliste

- 1: Küchenmaschine
- 2: Bedienfeld
- 3: Taster
- 4: Display
- 5: Gefäßaufnahme
- 6: Gefäß
- 7: Rührwerk
- 8: Heizung
- 9: Netzanschlusskabel
- 10: Deckel
- 11: Einfüllöffnung
- 12: Gefäßwandung
- 13: Gefäßrand
- 14: Wölbungsfläche
- 15: Kragen
- 16: Deckelrand
- 17: Verriegelungsteil
- 18: Verriegelungsabschnitt
- 19: Halterungsabschnitt
- 20: Höhlung
- 21: Übergreifabschnitt
- 22: Höhlungsabschnitt
- 23: Auflagebereich
- 24: Übergriff
- 25: ---
- 26: Ende
- 27: Einsteckabschnitt
- 28: Umfangsfläche
- 29: Aufnahme
- 30: Sacklochbohrung
- 31: Radialstufe
- 32: Einsenkung
- 33: Anschlagschulter
- 34: Distanzteil
- 35: Bohrung
- 36: Schlitz
- 37: Wandbereich
- 38: Betätigungsabschnitt
- 39: Innenfläche
- 40: Zapfen
- 41: Stirnfläche
- 42: Radialwandung
- 43: Stützschirm
- 44: Öffnung
- 45: Radialstufe

- l: Länge
- l': Gesamtlänge
- x: Vertikalachse
- y: Drehachse

- E: Ebene

- α: Winkel

## Patentansprüche

1. Elektrisch betriebene Küchenmaschine (1) mit einem Gefäß (6) und einem Deckel (10) für das Gefäß (6) und einem Gehäuse, wobei der Deckel (10) in der Verschlussstellung gegen das Gefäß (6) verriegelbar ist, wobei weiter das Gefäß (6) einen Gefäßboden und eine sich vom Boden nach oben erstreckende Gefäßwandung (12) aufweist, wobei die Gefäßwandung (12) in einen radial auskragenden Rand (13) übergeht, wobei weiter der Deckel (10) einen Deckelrand (16) aufweist, der in der Verschlussstellung in Überdeckung zu dem Gefäßrand (13) liegt, die Verriegelung aus einem zum Übergreifen des Deckels (10) bestehenden Verriegelungsteil (17) gebildet ist, das durch Drehen aus einer Freigabestellung in die Verriegelungsstellung und umgekehrt verlagerbar ist, das Verriegelungsteil (17) stangenartig ausgebildet ist und in Axialrichtung in einen feststehenden Halterungsabschnitt (19) und einen drehbaren Verriegelungsabschnitt (18) unterteilt ist, **dadurch gekennzeichnet, dass** der zur verriegelnden Einwirkung auf den Deckel (10) und/oder den Gefäßrand (13) ausgeformte Abschnitt des Verriegelungsteils (17) einen Einsteckabschnitt aufweist, welcher dem Gehäuse zugeordnet ist und der zur verriegelnden Einwirkung auf den Deckel (10) ausgeformte Abschnitt über eine zugeordnete Gehäusebegrenzung in Axialrichtung frei auskragt, so dass sich nur eine endseitige Halterung bzw. Lagerung des Verriegelungsteils (17) ergibt.

2. Küchenmaschine nach Anspruch 1, **dadurch gekennzeichnet, dass** der Verriegelungsabschnitt des Verriegelungsteils (17) einen sich in Achsrichtung erstreckenden, gehäuseseitigen Einsteckabschnitt (27) aufweist, der zumindest über einen Teil der axialen Erstreckung in Umfangsrichtung nur einen Teilabschnitt einer Kreisfläche bedeckt.

3. Küchenmaschine nach Anspruch 2, **dadurch gekennzeichnet, dass** der Einsteckabschnitt (27) sich in Umfangsrichtung über ein Viertel oder mehr des Umfangs erstreckt.

4. Küchenmaschine nach einem der Ansprüche 2 oder 3, **dadurch gekennzeichnet, dass** der Einsteckabschnitt (27) sich in Umfangsrichtung über drei Viertel oder weniger erstreckt.

5. Küchenmaschine nach einem der Ansprüche 2 bis 4, **dadurch gekennzeichnet, dass** der Einsteckabschnitt (27) massiv ausgebildet ist.

6. Küchenmaschine nach einem der Ansprüche 2 bis 5, **dadurch gekennzeichnet, dass** in Umfangsrichtung freikragende Wandbereiche (37) des Einsteckabschnittes (27) zur Betätigung der Verriegelung genutzt sind.

7. Küchenmaschine nach Anspruch 6, **dadurch gekennzeichnet, dass** die freikragenden Wandbereiche (37) Betätigungsabschnitte (38) ausformen, die sich in Umfangsrichtung erstreckende Flächenteile sind.

8. Küchenmaschine nach einem der vorhergehenden Ansprüche, **dadurch gekennzeichnet, dass** der Halterungsabschnitt (19) zwei koaxiale Abschnitte aufweist, zwischen denen in Radialrichtung der Einsteckabschnitt (27) des Verriegelungsabschnittes (18) aufgenommen ist.

9. Küchenmaschine nach Anspruch 8, **dadurch gekennzeichnet, dass** der eine Abschnitt des Halterungsabschnittes (19) ein sich in Axialrichtung erstreckender, zentraler Zapfen (40) ist.

10. Küchenmaschine nach einem der Ansprüche 8 oder 9, **dadurch gekennzeichnet, dass** der eine Abschnitt des Halterungsabschnittes (19) die Innenfläche (39) der Umfangswandung ist.

11. Küchenmaschine nach einem der vorhergehenden Ansprüche, **dadurch gekennzeichnet, dass** der Verriegelungsabschnitt (18) winkelbegrenzt in dem Halterungsabschnitt (19) um eine zentrale Achse (y) verdrehbar ist.

12. Küchenmaschine nach einem der Ansprüche 9 bis 11, **dadurch gekennzeichnet, dass** der zentrale Zapfen (40) über einen Teil seiner Länge über eine Radialwandung (42) an die Innenfläche (39) eines Teils der Umfangswandung angebunden ist.

13. Küchenmaschine nach einem der Ansprüche 9 bis 12, **dadurch gekennzeichnet, dass** der Einsteckabschnitt (27) eine zentrale, teilgeöffnete Aufnahme (29) für den Zapfen (40) aufweist.

14. Küchenmaschine nach einem der Ansprüche 2 bis 13, **dadurch gekennzeichnet, dass** an dem Einsteckabschnitt (27) in Einsteckrichtung vorgeordnet auf kleinerem Radius ein Distanzteil (34) angeordnet ist.

15. Küchenmaschine nach einem der Ansprüche 7 bis 14, **dadurch gekennzeichnet, dass** der Halterungsabschnitt (19) zugeordnet jedenfalls den Betätigungsabschnitten (38) eine Öffnung (44) aufweist, so dass die Betätigungsabschnitte (38) des Einsteckabschnitts (27) unter Durchgriff durch den Halterungsabschnitt (19) zur Betätigung frei liegen.

## Claims

1. Electrically operated kitchen appliance (1) comprising a vessel (6), a lid (10) for the vessel (6), and a housing, it being possible to lock the lid (10) against the vessel (6) in the closed position, the vessel (6) also comprising a vessel bottom and a vessel wall (12) extending upwardly from the bottom, the vessel wall (12) transitioning into a radially projecting rim (13), the lid (10) also comprising a lid rim (16) that covers the vessel rim (13) in the closed position, the locking being achieved by a locking part (17), for engaging over the lid (10), that can be moved out of a released position into the locked position and vice versa by rotation, and the locking part (17) being rod-shaped and being divided in the axial direction into a stationary retaining portion (19) and a rotatable locking portion (18), **characterised in that** the portion of the locking part (17) formed for acting on the lid (10) and/or the vessel rim (13) in a locking manner comprises an insertion portion which is associated with the housing, and the portion formed for acting on the lid (10) in a locking manner projects freely in the axial direction beyond an associated housing boundary such that the locking part (17) is only retained or mounted at the end.

2. Kitchen appliance according to claim 1, **characterised in that** the locking portion of the locking part (17) comprises an axially extending, housing-side insertion portion (27) which, in the circumferential direction, covers only a portion of the area of a circle at least over some of the axial extension.

3. Kitchen appliance according to claim 2, **characterised in that** the insertion portion (27) extends, in the circumferential direction, over a quarter or more of the circumference.

4. Kitchen appliance according to either claim 2 or claim 3, **characterised in that** the insertion portion (27) extends, in the circumferential direction, over three quarters or less.

5. Kitchen appliance according to any of claims 2 to 4, **characterised in that** the insertion portion (27) is solid.

6. Kitchen appliance according to any of claims 2 to 5, **characterised in that** wall regions (37) of the insertion portion (27) that project freely in the circumferential direction are used to actuate the locking.

7. Kitchen appliance according to claim 6, **characterised in that** the freely projecting wall regions (37) form actuation portions (38) that are surface parts that extend in the circumferential direction.

8. Kitchen appliance according to any of the preceding claims, **characterised in that** the retaining portion (19) comprises two coaxial portions, between which, in the radial direction, the insertion portion (27) of the locking portion (18) is received.

9. Kitchen appliance according to claim 8, **characterised in that** one portion of the retaining portion (19) is an axially extending, central pin (40).

10. Kitchen appliance according to either claim 8 or claim 9, **characterised in that** one portion of the retaining portion (19) is the inner surface (39) of the circumferential wall.

11. Kitchen appliance according to any of the preceding claims, **characterised in that** the locking portion (18) can be rotated about a central axis (y) through a limited angle in the retaining portion (19).

12. Kitchen appliance according to any of claims 9 to 11, **characterised in that** the central pin (40) is connected, over some of its length, to the inner surface (39) of part of the circumferential wall by means of a radial wall (42).

13. Kitchen appliance according to any of claims 9 to 12, **characterised in that** the insertion portion (27) comprises a central socket (29) for the pin (40), which socket is open in part.

14. Kitchen appliance according to any of claims 2 to 13, **characterised in that**, on the insertion portion (27), a spacer part (34) having a smaller radius is arranged so as to be positioned in front in the insertion direction.

15. Kitchen appliance according to any of claims 7 to 14, **characterised in that**, the retaining portion (19), associated in any case with the actuation portions (38), comprises an opening (44) such that the actuation portions (38) of the insertion portion (27), by passing through the retaining portion (19), are free to perform actuation.

## Revendications

1. Robot de cuisine électrique (1), comprenant une cuve (6) et un couvercle (10) pour la cuve (6) et un boîtier, dans lequel le couvercle (10) est verrouillable en position de fermeture (6) contre la cuve (6), dans lequel en outre la cuve (6) comprend un fond de cuve et une paroi de cuve (12) s'étendant depuis le fond vers le haut, dans lequel la paroi de cuve (12) se raccorde à un bord (13) faisant saillie radialement, dans lequel en outre le couvercle (10) présente un bord de couvercle (16) lequel est, en position de fermeture, situé en recouvrement du bord de cuve (13), le verrouillage étant réalisé par un élément de verrouillage (17) prévu pour venir en prise sur le couvercle lequel élément de verrouillage (17) est déplaçable par pivotement depuis une position de libération dans une position de verrouillage et vice versa, l'élément de verrouillage (17) étant réalisé en forme de tige et divisé en direction axiale en une partie de montage fixe (19) et une partie de verrouillage pivotante (18), **caractérisé en ce que** la partie de l'élément de verrouillage (17) qui est façonnée pour agir en verrouillage sur le couvercle (10) et/ou le bord de cuve (13), présente une partie d'insertion qui est associée au boîtier et la partie façonnée pour agir en verrouillage sur le couvercle (10) est en porte-à-faux libre dans la direction axiale au-delà d'une délimitation associée du boîtier de manière à obtenir un montage ou support de l'élément de verrouillage uniquement en extrémité.

2. Robot de cuisine selon la revendication 1, **caractérisé en ce que** la partie de verrouillage de l'élément de verrouillage (17) comprend côté boîtier une partie d'insertion (27) s'étendant en direction axiale, laquelle, sur au moins une partie de l'extension axiale, ne couvre en direction circonférentielle qu'une partie d'une surface circulaire.

3. Robot de cuisine selon la revendication 2, **caractérisé en ce que** la partie d'insertion (27) s'étend dans la direction circonférentielle sur un quart ou plus de la circonférence.

4. Robot de cuisine selon la revendication 2 ou 3, **caractérisé en ce que** la partie d'insertion (27) s'étend dans la direction circonférentielle sur trois quarts ou moins.

5. Robot de cuisine selon l'une des revendications 2 à 4, **caractérisé en ce que** la partie d'insertion (27) est réalisée massive.

6. Robot de cuisine selon l'une des revendications 2 à 5, **caractérisé en ce que** sont utilisées pour l'actionnement du verrouillage des zones de paroi (37) de la partie d'insertion (27) qui sont en saillie libre dans la direction circonférentielle.

7. Robot de cuisine selon la revendication 6, **caractérisé en ce que** les zones de paroi en saillie libre (37) forment des parties d'actionnement (38) qui sont des parties surfaciques s'étendant en direction circonférentielle.

8. Robot de cuisine selon l'une des revendications précédentes, **caractérisé en ce que** la partie de montage (19) comprend deux parties coaxiales entre lesquelles la partie d'insertion (27) de la partie de verrouillage (18) est reçue en direction radiale.

9. Robot de cuisine selon la revendication 8, **caractérisé en ce que** l'une des parties de la partie de montage (19) est une broche centrale (40) s'étendant en direction axiale.

10. Robot de cuisine selon l'une des revendications 8 ou 9, **caractérisé en ce que** l'une des parties de la partie de montage (19) est la surface interne (39) de la paroi circonférentielle.

11. Robot de cuisine selon l'une des revendications précédentes, **caractérisé en ce que** la partie de verrouillage (18) est apte à être pivoter de manière angulairement limitée autour d'un axe central (y) dans la partie de montage (19).

12. Robot de cuisine selon l'une des revendications 9 à 11, **caractérisé en ce que** la broche centrale (40) est liée sur une partie de sa longueur par une paroi radiale (42) à la surface interne (39) d'une partie de la paroi circonférentielle.

13. Robot de cuisine selon l'une des revendications 9 à 12, **caractérisé en ce que** la partie d'insertion (27) présente un logement central partiellement ouvert (29) pour la broche (40).

14. Robot de cuisine selon l'une des revendications 2 à 13, **caractérisé en ce qu'**une partie d'espacement (34) est agencée, en amont dans la direction d'insertion, sur un rayon plus petit sur la partie d'insertion (27).

15. Robot de cuisine selon l'une des revendications 7 à 14, **caractérisé en ce que** la partie de montage (19) présente une ouverture (44) associée au moins aux parties d'actionnement (38) de manière à ce que les parties d'actionnement (38) de la partie d'insertion (27) sont exposées pour l'actionnement par passage à travers la partie de montage (19).
